(19) Europäisches Patentamt
European Patent Office
Office européen des brevets

(11) **EP 2 493 047 A1**

(12) **EUROPÄISCHE PATENTANMELDUNG**

(43) Veröffentlichungstag:
    **29.08.2012  Patentblatt 2012/35**

(51) Int Cl.:
    *H02J 7/00* (2006.01)        *H01M 10/44* (2006.01)
    *H01M 10/48* (2006.01)

(21) Anmeldenummer: **11001501.3**

(22) Anmeldetag: **23.02.2011**

(84) Benannte Vertragsstaaten:
    **AL AT BE BG CH CY CZ DE DK EE ES FI FR GB
    GR HR HU IE IS IT LI LT LU LV MC MK MT NL NO
    PL PT RO RS SE SI SK SM TR**
    Benannte Erstreckungsstaaten:
    **BA ME**

(71) Anmelder: **Torqeedo GmbH**
    **82319 Starnberg (DE)**

(72) Erfinder:
    • **Biebach Jens,**
      **82327 Tutzing (DE)**
    • **Böbel , Dr. Friedrich**
      **82547 Eurasburg (DE)**

(74) Vertreter: **Gellner, Bernd**
    **PATENTANWALT**
    **Gartenstrasse 32b**
    **82547 Eurasburg (DE)**

(54) **Parallelschaltung elektrischer Speicher**

(57)    Die Erfindung betrifft eine Schaltung und ein Verfahren zum Parallelschalten eines ersten elektrischen Speichers 1 und eines zweiten elektrischen Speichers 2, wobei der erste elektrische Speicher und der zweite elektrische Speicher jeweils eine Leerlaufspannung $U_{Bat1}$, $U_{Bat2}$ und eine Impedanz $R_1$ bzw. $R_2$ besitzen und Anschlussklemmen zur Ladungsentnahme oder Ladungszufuhr aufweisen. Die Leerlaufspannung $U_{Bat1}$ des ersten Speichers 1 ist größer als die Leerlaufspannung $U_{Bat2}$ des zweiten Speichers 2. Bei Ladungsentnahme wird zunächst nur dem ersten Speicher 1 Ladung entnommen und der zweite Speicher 2 wird parallel zu dem ersten Speicher 1 geschaltet, wenn die Differenz der an den Anschlussklemmen des ersten Speichers 1 abfallenden Spannung und der Leerlaufspannung $U_{Bat2}$ des zweiten Speichers 2 weniger als eine vorgegebene zuschalt-Differenzspannung beträgt.

**Fig. 1**

**Beschreibung**

Die Erfindung betrifft ein Verfahren zum Parallelschalten eines ersten elektrischen Speichers und eines zweiten elektrischen Speichers, wobei der erste elektrische Speicher und der zweite elektrische Speicher jeweils eine Leerlaufspannung und eine Impedanz besitzen und Anschlussklemmen zur Ladungsentnahme oder Ladungszufuhr aufweisen, wobei die Leerlaufspannung des ersten Speichers größer als die Leerlaufspannung des zweiten Speichers ist. Ferner bezieht sich die Erfindung auf eine Schaltung eines ersten elektrischen Speichers und eines zweiten elektrischen Speichers, wobei der erste elektrische Speicher über zwei erste elektrische Leiter mit Anschlussklemmen zur Ladungsentnahme oder Ladungszufuhr verbunden ist, wobei ein erster Schalter in einem der ersten elektrischen Leiter vorgesehen ist, wobei der zweite elektrische Speicher über zwei zweite elektrische Leiter mit den Anschlussklemmen verbunden ist, wobei ein zweiter Schalter in einem der zweiten elektrischen Leiter vorgesehen ist.

Die Nutzbarkeit nicht stationärer elektrischer Verbraucher, wie zum Beispiel elektrischer Antriebe, hängt wesentlich von der Kapazität des nutzbaren Speichers elektrischer Energie ab. Typische Energiespeicher für nicht stationäre Anwendungen sind elektrische Batterien, Akkumulatoren oder Kondensatoren.

Für diese Klasse von Energiespeichern ist charakteristisch, dass der Ladezustand im unbelasteten Zustand mit einer bestimmten Klemmenspannung korreliert. Bei gleicher Speichertechnologie und gleichem Ladezustand korreliert das Volumen des Speichers linear mit der gespeicherten Energiemenge, das heißt je größer der Speicher, desto größer ist die darin gespeicherte Energie.

Der maximale Energieinhalt eines Speichers hat neben Kostenaspekten auch mechanische Aspekte. Es dürfen unter Umständen bestimmte Abmessungen nicht überschritten werden, um den Einbau z.B. in einem Fahrzeug und den Transport des Speichers zu ermöglichen. Desweiteren sind auch der Gesamtmasse durch Erfordernisse, die sich aus der Handhabung und dem Transport ableiten, Grenzen gesetzt.

Übersteigt der Gesamtenergiebedarf die Grenzen eines Speichers, die sich aus den Abmessungen und der Masse ableiten, müssen mehrere Speicher zusammengeschaltet werden. Die Notwendigkeit der Zusammenschaltung mehrerer Speicher zu einem großen Speicher kann sich auch aus dem verfügbaren Einbauraum ableiten.

Handelt es sich beim Speicher um eine Batterie, ist diese aus Grundeinheiten, den Batteriezellen, aufgebaut. Der Energieinhalt einer Batteriezelle hängt von der Zellentechnologie und dem Zellenvolumen ab. Durch geeignete Wahl der Anzahl der Zellen und deren Zusammenschaltung zu sogenannten Core Packs kann der Energieinhalt und die Stromtragfähigkeit des Core Packs proportional zur Anzahl der Zellen gestaltet werden.

Durch ein geeignetes Verhältnis von Reihen- zu Parallelschaltung der Core Packs innerhalb einer Batterie ist desweiteren die Anpassung der Impedanz der Batterie an die Impedanz des Verbrauchers möglich, d.h. die Batterie kann so abgestimmt werden, dass sie in der Lage ist, auch den maximal benötigten Strom bei erforderlichem Energieinhalt zu liefern.

Die Erhöhung des Energieinhaltes des Speichers kann durch Reihenschaltung und/oder Parallelschaltung mehrerer Batterien vorgenommen werden. Bei Reihenschaltung mehrerer Batterien ergeben sich jedoch durch die erhöhte Systemspannung höhere Anforderungen an die Isolation und an Kriech- und Luftstrekken, denen die Ausführung der Einzelbatterie häufig nicht entspricht, da deren Isolationssystem ausschließlich auf das Spannungsniveau des Einzelbetriebs abgestimmt ist.

Die Parallelschaltung mehrerer Batterien wird daher bei begrenzter Spannungsfestigkeit der Einzelbatterie oder der anzuschließenden Verbraucher als geeignetere Maßnahme zur Erhöhung des Energieinhaltes des Speichers betrachtet. Dies gilt auch bei Speichern bestehend aus Akkumulatoren oder Kondensatoren.

Zur Erfüllung verschiedener Sicherheitsanforderungen sind elektrische Speicher mit einem Speicherschalter ausgestattet. Ist der Schalter deaktiviert, sind die zugängigen Speicheranschlüsse spannungsfrei.

Bei der Parallelschaltung von elektrischen Speichern werden Anschlüsse gleicher Polarität miteinander verbunden. Das Ist unproblematisch, solange bei N Speichern mindestens N-1 Speicherschalter geöffnet sind.

Für die Zeit, in denen die Speicher nicht mit der gemeinsamen Sammelschiene verbunden sind, kann sich ihre Spannungslage unterschiedlich entwickeln. Ursachen hierfür können zum Beispiel das separate Laden über unterschiedliche Zeiträume oder auch die unterschiedliche Eigenentladung bei Nichtbanutzen des Speichers über einen längeren Zeitraum sein.

Sind die Spannungen der Speicher unterschiedlich, fließt nach dem Zusammenschalten von zwei Speichern, das heißt nach dem Schließen der entsprechenden zwei Speicherschalter, ein Strom vom Speicher höherer Spannung zum Speicher niedrigerer Spannung, der solange einen Ladungsausgleich bewirkt, bis die Spannungen Ober beiden Speichern gleich sind. Dies gilt unter der Annahme, dass keine Last an die parallel geschalteten Speicher angeschlossen wurde, über der die Spannung kleiner als die Leerlaufspannung des Speichers mit der kleineren Ladung ist. Die Höhe des Stromflusses wird definiert durch die Spannungsdifferenz zwischen beiden Speichern und dem in Reihe liegenden Widerstand. Im Falle der Parallelschaltung zweier gleicher Speicher ist bezüglich des Ausgleichstromes der doppelte Innenwiderstand eines Speichers wirksam.

Der Ausgleichsstrom führt bei N parallel geschalteten Speichern an N-1 Speicherschaltern zu Einschaltverlusten, falls sich die Spannung der zuzuschaltenden Batterie von der Spannung der bereits zugeschalteten Batterie bzw. der resultierenden Spannung der bereits zugeschalteten Batterien unterscheidet. Wird der Schalter des ersten Speichers geschlossen, findet noch kein Stromfluss statt, da die Differenzspannung noch über dem zweiten Schalter abfällt. Wird nun der Schalter des zweiten Speichers geschlossen, kommt es bis zum Erreichen des stationären Durchlasswiderstandes des Schalters zu einer Verlustleistungsspitze. die sich als Produkt von Spannungsabfall **über** dem Schalter und wirksamem Ausgleichsstrom ergibt. Durch die auftretende Schaltverlustleistung kommt es zur Erosion der Schaltkontakte. Die Schalter müssen daher für einen maximal zu schaltenden Strom und den Charakter der Last spezifiziert werden.

Der Ausgleichsstrom bewirkt am wirksamen Ersatzwiderstand der Speicher Verluste, so dass ein Teil der gespeicherten Energie während des Vorgangs des Ladungs- und damit Spannungsausgleichs in Wärme umgewandelt wird.

Wenn zwei Lithium-Mangan-Batterien beispielsweise einen Innenwiderstand von je 1 mOhm haben und sich bei der Parallelschaltung dieser Batterien deren Batteriespannungen um beispielsweise 10 Volt unterscheidet, so fließt aufgrund des sehr geringen Innenwiderstands ein Ausgleichsstrom von 5000 A, der ein hohes Gefahrenpotential darstellen kann.

Aus der EP 1811592 B1 ist eine Batterie mit einer Sicherheitsschaltung bekannt, welche in der Verbindung zwischen den Batteriezellen und einem der Batteriepole einen Widerstand aufweist und wobei parallel zu dem Widerstand ein Schalter angeordnet ist, und wobei der Schalter erst dann geschlossen, wenn der zwischen den Batteriezellen und einem der Batteriepole fließende Strom einen vorgegebenen Minimalstrom unterschreitet.

Aufgabe vorliegender Erfindung ist es, ein Verfahren zur Parallelschaltung von zwei oder mehr elektrischen Speichern und eine entsprechende Schaltung vorzuschlagen, welche das Parallelschalten von Speichern unterschiedlicher Leerlaufspannung bei minimierter Beanspruchung der beteiligten Schalter ermöglichen, wobei der Ladungsausgleich zwischen den Speichern minimiert oder völlig verhindert wird. Beim Zusammenschalten zweier Speicher fließende Ausgleichsströme sollen vermieden oder möglichst auf ein Minimum begrenzt werden.

Eine weitere Aufgabe ist es, ein Verfahren und eine Schaltung aufzuzeigen, welche eine Parallelschaltung zweier elektrischer Speicher ohne oder mit nur geringer Unterbrechung der Leistungsentnahme erlauben.

Alle oder zumindest ein Teil dieser Aufgaben werden durch ein Verfahren zum Parallelschalten eines ersten elektrischen Speichers und eines zweiten elektrischen Speichers gelöst, wobei der erste elektrische Speicher und der zweite elektrische Speicher jeweils eine Leerlaufspannung und eine Impedanz besitzen und Anschlussklemmen zur Ladungsentnahme oder Ladungszufuhr aufweisen, wobei die Leerlaufspannung des ersten Speichers größer als die Leerlaufspannung des zweiten Speichers ist, und welches dadurch gekennzeichnet ist, dass bei Ladungsentnahme zunächst nur dem ersten Speicher Ladung entnommen wird und der zweite Speicher parallel zu dem ersten Speicher geschaltet wird, wenn die Differenz der an den Anschlussklemmen des ersten Speichers abfallenden Spannung und der Leerlaufspannung des zweiten Speichers weniger als eine vorgegebene Zuschalt-Differenzspannung beträgt und / oder bei Ladungszufuhr zunächst nur dem zweiten Speicher Ladung zugeführt wird und der erste Speicher parallel zu dem zweiten Speicher geschaltet wird, wenn die Differenz der an den Anschlussklemmen des zweiten Speichers abfallenden Spannung und der Leerlaufspannung des ersten Speichers weniger als eine vorgegebene Zuschalt-Differenzspannung beträgt.

Die erfindungsgemäße Schaltung weist einen ersten elektrischen Speicher und einen zweiten elektrischen Speicher auf, wobei der erste elektrische Speicher über zwei erste elektrische Leiter mit Anschlussklemmen zur Ladungsentnahme oder Ladungszufuhr verbunden ist, wobei ein erster Schalter in einem der ersten elektrischen Leiter vorgesehen ist, wobei der zweite elektrische Speicher über zwei zweite elektrische Leiter mit den Anschlussklemmen verbunden ist, wobei ein zweiter Schalter in einem der zweiten elektrischen Leiter vorgesehen ist. Die Schaltung ist dadurch gekennzeichnet, dass ein erstes Messgerät zur Erfassung der speicherseitig des ersten Schalters zwischen den beiden ersten elektrischen Leitern anliegenden Spannung und ein zweites Messgerät zur Erfassung der speicherseitig des zweiten Schalters zwischen den beiden zweiten elektrischen Leitern anliegenden Spannung vorgesehen sind, wobei das erste und das zweite Messgerät an eine Steuereinheit angeschlossen sind, welche eine Vergleichseinheit zum Vergleichen der erfassten Spannungen und eine Ansteuerung des ersten und/oder zweiten Schalters in Abhängigkeit von dem Vergleich aufweist.

Mittels der Messgeräte können die momentane Klemmenspannung des oder der Speicher, die bereits mit der Last verbunden sind, und die Leerlaufspannung des als nächstes zuzuschaltenden Speichers erfasst werden. Diese Werte werden in der Steuereinheit miteinander verglichen. Wenn diese beiden Werte eine vorgegebene Bedingung erfüllen, insbesondere wenn diese voneinander um nicht mehr als eine vorgegebene Zuschalt-Differenzspannung oder Abschalt-Differenzspannung abweichen, steuert die Steuereinheit den Schalter des zuzuschaltenden oder abzuschaltenden Speichers an, um diesen zu schließen oder zu öffnen. Die erfindungsgemäße Schaltung erlaubt damit die Parallelschaltung des ersten oder zweiten Speichers zu einem gemeinsamen Speicher oder die Abkopplung des ersten oder zweiten Speichers aus einer bestehenden Parallelschaltung in Abhängigkeit von der Klemmenspannung und der Leerlaufspannung des ersten oder zweiten Speichers.

Mit dem Begriff Speicher ist im Folgenden ein Speicher zur Speicherung elektrischer Energie gemeint. Insbesondere wird unter einem Speicher eine Batterie, ein Akkumulator oder ein Kondensator verstanden. Entsprechend dem allgemeinen Sprachgebrauch soll im Rahmen dieser Anmeldung der Begriff Batterie auch Akkumulatoren und wiederaufladbare Batterien umfassen. Die Erfindung wird mit besonderem Vorteil zur Parallelschaltung von Lithium-Ionen-Akkumulatoren, insbesondere Lithium-Mangan-Akkumulatoten, eingesetzt, da diese Batterien- bzw. Akkumulatorentypen einen geringen Innenwiderstand aufweisen, so dass ohne Einsatz der Erfindung bei der Parallelschaltung dieser Batterien / Akkumulatoren hohe Ströme fließen könnten.

Unter dem Begriff Anschlussklemmen werden die Anschlüsse des Speichers verstanden, über die dem Speicher Ladung entnommen oder zugeführt werden kann. Der Begriff Klemmenspannung kennzeichnet die an diesen Anschlussklemmen anliegende Spannung.

In einer bevorzugten Ausführungsform der Erfindung ist in einer der elektrischen Verbindungsleitungen zwischen dem Speicher und den Anschlussklemmen ein Schalter vorgesehen. Wenn der Schalter geöffnet ist, das heißt die elektrische Verbindung zwischen dem Speicher und einer der Anschlussklemmen unterbrochen ist, entspricht die zwischen den beiden elektrischen Verbindungsleitungen speicherseitig des Schalters abfallende Spannung, das heißt die zwischen dem den Speicher und den Schalter verbindenden Teilstück der einen elektrischen Verbindungsleitung und der anderen elektrischen Verbindungsleitung abfallende Spannung, der Leerlaufspannung des Speichers. Bei geschlossenem Schalter entspricht diese Spannung der Klemmenspannung. Klemmenspannung und Leerlaufspannung können also mit demselben Messgerät bestimmt werden, wobei im ersten Fall der Schalter geschlossen, im zweiten Fall der Schalter geöffnet ist.

Als Impedanz eines Speichers wird dessen elektrischer Widerstand bezeichnet, wobei die Impedanz sowohl dynamische als auch statische Anteile besitzen kann. Im stationären Betrieb entspricht die Impedanz dem Innenwiderstand des Speichers. Stationärer Betrieb bedeutet hierbei, dass über mehrere Millisekunden ein konstanter Strom geliefert wird und die in dieser Zeit auftretende Temperaturänderung des Speichers vernachlässigbar ist.

Unter den Begriffen Verbraucher oder Last wird ein elektrischer Verbraucher, insbesondere ein elektrischer Motor, verstanden, der aus dem oder den Speichern mit elektrischer Energie versorgt wird. Im weiteren Sinn kann es sich aber auch um eine Last handeln, die keinen Strom verbraucht, sondern die dem oder den Speichern Ladung zuführt. Sofern letztere Bedeutung gemeint ist, wird im Folgenden ausdrücklich darauf hingewiesen.

Erfindungsgemäß werden die Speicher in Abhängigkeit von ihren Leerlaufspannungen zu- oder abgeschaltet. Bei Ladungsentnahme wird zunächst nur dem ersten Speicher mit der höheren Leerlaufspannung Ladung entnommen. Die Angleichung der Klemmenspannung des bereits zugeschalteten ersten Speichers an die Leerlaufspannung des zweiten Speichers passiert im Wesentlichen durch den Spannungsabfall über dem Innenwiderstand des zuerst zugeschalteten ersten Speichers. Für den Fall, dass der Laststrom nicht hoch genug ist, um einen hinreichenden Spannungsabfall zu bewirken, kommt es über die Zeit zu einem Angleichen der Leerlaufspannungen durch Entladen des ersten Speichers.

In der Praxis wird diese Schaltung vorzugsweise dadurch realisiert, dass pro Speicher ein Schalter und ein Spannungsmessgerät vorgesehen sind. Der Schalter ist in einer der elektrischen Verbindungen zwischen dem Speicher und einer der Anschlussklemmen des Speichers angeordnet. Das Spannungsmessgerät misst die Spannung zwischen der Speicherseite des Schalters, d.h. zwischen dem Teilstück, welches den Speicher und den zugehörigen Schalter verbindet, und der anderen Anschlussklemme des Speichers, die direkt ohne Zwischenschaltung eines Schalters mit dem Speicher verbunden ist. Wenn der Schalter geöffnet ist und damit der entsprechende Speicher von den Anschlussklemmen getrennt ist, misst das Spannungsmessgerät die Leerlaufspannung des Speichers. Wenn der Schalter geschlossen ist, misst das Spannungsmessgerät die Klemmenspannung des Speichers. Wenn keine Last an die Anschlussklemmen angeschlossen ist, stimmen Leerlaufspannung und Klemmenspannung überein.

Die Zuschalt-Differenzspannungen beim Entladevorgang und die Zuschaft-Differenzspannungen beim Ladevorgang können unabhängig voneinander gewählt werden. Beide Werte können sowohl positiv, negativ als auch Null sein. Je weiter die Zuschalt-Differenzspannung dem Wert Null angenähert wird, umso weiter konvergiert auch der Ausgleichstrom gegen Null und umso geringer ist die Beanspruchung des Schalters, der das Parallelschalten realisiert. Beim Entladen wird im Fall einer positiven Zuschalt-Differenzspannung der zweite Speicher parallel geschaltet, wenn die äußere Klemmenspannung, d.h. die Spannung zwischen den Klemmen, an die die Last angeschlossen ist, auf einen Wert gefallen ist, der der Leerlaufspannung des zweiten Speichers plus dem Betrag der Zuschalt-Differenzspannung entspricht. Umgekehrt wird bei einer negativen Zuschalt-Differenzspannung der zweite Speicher parallel geschaltet, wenn die äußere Klemmenspannung auf einen Wert gefallen ist, der der Leerlaufspannung des zweiten Speichers minus dem Betrag der Zuschalt-Differenzspannung entspricht. Für die beim Ladevorgang gewählte Zuschalt-Differenzspannung gilt Entsprechendes.

Das Parallelschalten zweier elektrischer Speicher erfolgt dann optimal, wenn der Spannungsunterschied zum Zeitpunkt des Parallelschaltvorganges Null oder zumindest minimal ist. Je kleiner der Spannungsunterschied zwischen den Energiespeichern ist, umso kleiner ist der Spannungsabfall über dem zuletzt schließenden Schalter und umso geringer ist auch der zu erwartende Ausgleichsstrom, so dass sich die Verringerung des Spannungsunterschiedes quadratisch bezüglich der Reduzierung der Schalterverluste und damit auch bezüglich der Reduzierung des Schalterverschleißes auswirkt.

Beim Parallelschalten zweier elektrischer Speicher wird erfindungsgemäß zunächst der Speicher mit der höheren Leerlaufspannung an den elektrischen Verbraucher bzw. die Last angeschlossen.

Die Ermittlung der Leerlaufspannung eines Speichers kann bei nicht mit dem Speicher verbundener Last beispielsweise durch Messung der an den Anschlussklemmen des Speichers anliegenden Klemmenspannung erfolgen. Da ohne Last kein Strom fließt, kommt es am Innenwiderstand bzw. an der Impedanz des Speichers zu keinem Spannungsabfall, so dass die Klemmenspannung gleich der Leerlaufspannung des Speichers ist.

Ist der Speicher mit einer Last verbunden, kann die Leerlaufspannung aus der Klemmenspannung und der über dem Innenwiderstand des Speichers abfallenden Spannung bestimmt werden. Letzterer Spannungsabfall kann beispielsweise bei Kenntnis des Innenwiderstandes aus dem momentanen Stromfluss errechnet werden. In einer bevorzugten Ausführungsform ist daher ein Strommessgerät zur Erfassung des von oder zu dem ersten und/oder zweiten Speicher fließenden Stroms vorgesehen.

Nach dem Anschließen der Last an den ersten Speicher und gegebenenfalls nach dem Einschalten der Last wird dem ersten Speicher Ladung entzogen. Je nach aufgenommener Leistung und daraus resultierendem Strom tritt an der Impedanz des ersten Speichers ein Spannungsabfall auf, um den sich die Klemmenspannung gegenüber der Leerlaufspannung des ersten Speichers vermindert. In dieser Phase wird die Last ausschließlich über den ersten Speicher mit elektrischer Energie versorgt. Neben der Annäherung der Klemmenspannung des ersten Speichers an die Leerlaufspannung des zweiten Speichers durch den Spannungsabfall über dem Innenwiderstand des ersten Speichers wird auch erreicht, dass sich der erste Speicher, der den Strom liefert, entlädt, so dass sich die Leerlaufspannungen des ersten und des zweiten Speichers mit der Zeit angleichen.

Wird der erste Speicher hinreichend hoch belastet, d.h. es wird dem ersten Speicher genügend Strom entnommen, kann sich die an den Anschlussklemmen des ersten Speichers abfallende Spannung an die Leerlaufspannung des zweiten Speichers um weniger als eine vorgegebene Zuschalt-Differenzspannung annähern.

Wenn sich die Klemmenspannung des ersten Speichers und die Leerlaufspannung des zweiten Speichers bis auf die Zuschalt-Differenzspannung angeglichen haben, kann der zweite Speicher mit nur geringer Verlustleistung und ohne größere Belastung der Schalter parallel zum ersten Speicher geschaltet werden, so dass die Last in der Folge mit Energie aus dem ersten und dem zweiten Speicher versorgt wird.

Für die Speicher ist unter Umständen ein maximal zulässiger Strom definiert. Wird dieser überschritten, besteht die Gefahr, dass der Speicher geschädigt wird. Von Vorteil ist daher eine Steuerung vorgesehen, welche dafür sorgt, dass der aus den Speichern abgezogene Strom den maximalen Strom des jeweiligen Speichers nicht übersteigt. Dies ist insbesondere in der ersten Phase, in der der Strom ausschließlich vom ersten Speicher geliefert wird, von Bedeutung. Von Vorteil wird daher überwacht, dass der Strom nicht den Maximalstrom der angeschlossenen Speicher, insbesondere des ersten Speichers, überschreitet.

Der zweite Speicher wird von Vorteil durch Schließen eines Schalters parallel zum ersten Speicher geschaltet. Da der Schalter für den Schließvorgang eine bestimmte Zeit benötigt, ist es günstig, wenn der aus dem ersten Speicher abgezogene Strom, bei dem der Spannungsabfall am Innenwiderstand des ersten Speichers den gewünschten Wert hat, während des Schaltvorgangs konstant gehalten wird. Da die hierfür benötigte Zeit im Millisekundenbereich liegt, ist beispielsweise bei der Versorgung eines elektrischen Antriebs eine entsprechende Verzögerung im Antriebsstrang eines Fahrzeuges nicht spürbar.

Bei weiterer Erhöhung des Laststromes wird auch dem zweiten Speicher Ladung entzogen. Unter der Annahme identischer Speicher mit gleichen Temperaturen und gleichem Erholungszustand nimmt der Strom aus dem ersten Speicher um den gleichen Betrag zu wie der Strom aus dem zweiten Speicher. Beide Speicher werden aber weiterhin unterschiedlich stark beansprucht, so dass der erste Speicher stärker als der zweite Speicher entladen wird und sich die Leerlaufspannungen beider Speicher angleichen.

Bei Reduzierung der Verbraucherleistung sinkt der Strom und die Klemmenspannung, d.h. die Spannung zwischen den Anschlussklemmen, an die die Last angeschlossen ist, erhöht sich. Wenn die Klemmenspannung wieder größer als die Leerlaufspannung des zweiten Speichers wird, ist es sowohl möglich, die Parallelschaltung von erstem und zweitem Speicher beizubehalten als auch den zweiten Speicher abzuschalten, das heißt, die stromleitende Verbindung zwischen den äußeren Anschlussklemmen, an die die Last angeschlossen ist, und dem zweiten Speicher zu unterbrechen. Das Abschalten des zweiten Speichers erfolgt vorzugsweise dann, wenn die Klemmenspannurig sich um eine bestimmte Abschalt-Differenzspannung von der Leerlaufspannung des zweiten Speichers unterscheidet und/oder wenn der zweite Speicher aufgrund der sich ändernden Lastverhältnisse nur noch einen vernachlässigenden oder keinen Betrag zur Speisung der Last leistet oder wenn der zweite Speicher sogar beginnt, Energie aufzunehmen.

Da der zweite Speicher in dieser Situation mit der Last verbunden ist, kann dessen Leerlaufspannung nicht direkt gemessen werden. Die Lesrlaufspannung wird daher von Vorteil aus der Klemmenspannung und der über dem Innenwiderstand des Speichers abfallenden Spannung bestimmt. Letzterer Spannungsabfall kann beispielsweise bei Kenntnis des Innenwiderstandes aus dem momentanen Stromfluss errechnet werden.

Eine andere Möglichkeit, den Abschaltzeitpunkt des zweiten Speichers zu bestimmen, besteht darin, den Strom von bzw. zu dem zweiten Speicher zu messen und den zweiten Speicher dann abzuschalten, wenn dieser Strom einen vorgegebenen Maximalstrom unterschreitet.

Auch beim Abschalten ist es günstig, den Strom während des Abschaltens des zweiten Speichers konstant zu halten.

Das Abschalten eines Speichers wird jedoch frühestens dann stattfinden, wenn der Gesamtstrom den zulässigen Strom eines einzelnen Schalters bzw. Speichers nicht mehr übersteigt. Eine zeitige Abschaltung des zweiten Speichers unmittelbar nachdem die Klemmenspannung die Leerlaufspannung des zweiten Speichers überschritten hat verhindert Verluste, die aus dem Ladungsausgleich zwischen den Speichem resultieren würden.

In einer weiteren bevorzugten Ausführungsform werden Signale mit einer Lastschaltung ausgetauscht, welche zur Steuerung oder Regelung der Last dient, die von dem ersten und/oder zweiten Speicher mit Ladung versorgt wird. Die Signale von der Lastschaltung werden zumindest mitgenutzt, um während des Zu- oder Abschaltens des ersten oder zweiten Speichers den zu oder von den Speicher(n) fließenden Strom konstant zu halten. Während der Schaltvorgänge wird der Laststrom in Abhängigkeit von diesen Signalen und gegebenenfalls in Abhängigkeit von weiteren Größen konstant gehalten.

Um eine Instabilität des Systems im Bereich des Umschaltpunktes zu vermeiden, ist es günstig, eine Hysterese vorzusehen. Zuschaltung und Abschaltung des Speichers werden bei unterschiedlichen Spannungen durchgeführt. Das heißt die Zuschalt-Differenzspannung beim Zuschalten eines Speichers unterscheidet sich von der Abschalt-Differenzspannung beim Abschalten des Speichers.

Der erste Speicher oder der zweite Speicher können jeweils mehrere parallel geschaltete Speicher aufweisen, die vorzugsweise in analoger Weise parallelgeschaltet werden oder wurden. Das heißt, das erfindungsgemäße Verfahren kann auch mit Vorteil bei mehr als zwei Speichern angewendet werden. Zuerst wird ermittelt, welcher Speicher die höchste Leerlaufspannung hat. Dieser Speicher wird im Sinne der Erfindung als erster Speicher angesehen und zuerst eingeschaltet und belastet. Weicht die Klemmenspannung dieses ersten Speichers um weniger als die Zuschaft-Differenzspannung von der Leerlaufspannung des Speichers mit der zweithöchsten Leerlaufspannung ab, wird der zweite Speicher eingeschaltet.

Bei weiter steigender Belastung wird der Augenblick abgewartet, zu dem die gemeinsame Klemmenspannung von erstem und zweitem Speicher von der Leerlaufspannung des Speichers mit der dritthöchsten Leerlaufspannung um weniger als die Zuschalt-Differenzspannung abweicht. Dann wird auch der Speicher mit der dritthöchsten Leerlaufspannung parallel geschaltet. Dieses Verfahren kann für eine beliebige Anzahl N von Speichern wiederholt werden. Die bereits parallel geschalteten Speicher können hierbei als erster Speicher im Sinne der Erfindung angesehen werden, denen der als nächstes zuzuschaltende Speicher als zweiter Speicher im Sinne der Erfindung zusätzlich parallel geschaltet wird.

Bei mehreren parallel zu schaltenden Speichern werden vorzugsweise jeweils identische Zuschalt-Differenzspannungen gewählt. Dies gilt sowohl für den Entlade- als auch für den Ladevorgang. Die Parallelschaltung des N-ten Speichers erfolgt jeweils dann, wenn die Klemmenspannung der bereits parallelgeschalteten N-1 Speicher um eine feste Zuschalt-Differenzspannung von der Leerlaufspannung des N-ten Speichers abweicht. Die Zuschalt-Differenzspannung ist dabei dieselbe, unabhängig davon, welcher Speicher zugeschaltet wird. Es ist aber auch möglich, für die (N-1) Zuschaltvorgänge unterschiedliche Zuschalt-Differenzspannungen zu wählen, da mit jedem parallelgeschalteten Speicher der Innenwiderstand abnimmt, so dass der Ausgleichsstrom bei gleichbleibender Differenzspannung zunehmen würde. Bevorzugt wird deshalb die Zuschalt-Differenzspannung indirekt proportional zur Anzahl der bereits parallelgeschalteten Speicher gewählt.

Das erfindungsgemäße Verfahren wird vorzugsweise auch beim Laden der Speicher eingesetzt. Die Erfindung erlaubt zum Beispiel das gleichzeitige Laden des ersten und des zweiten Speichers (und gegebenenfalls weiterer Speicher) mit einem Ladegerät hoher Leistung. Von Vorteil wird die Erfindung beispielsweise auch bei einer Rückgewinnung von Bremsenergie eingesetzt. Die obigen im Zusammenhang mit dem Entladen der Speicher gemachten Aussagen gelten in analoger Weise, wobei sich die Reihenfolge der Zuschaltung der Speicher umdreht. Beim Laden wird zunächst nur der Speicher mit der kleinsten Leerlaufspannung geladen. Wenn die Klemmenspannung des an das Ladegerät angeschlossenen Speichers um weniger als eine vorgegebene Zuschalt-Differenzspannung von der Leerlaufspannung des Speichers mit der nächsthöheren Leerlaufspannung abweicht, wird auch dieser Speicher parallel geschaltet und beide Speicher werden geladen.

Die Zuschalt-Differenzspannung beim Ladevorgang kann genauso groß gewählt werden wie die Zuschalt-Differenzspannung beim Entladevorgang. Es ist aber auch möglich, unterschiedliche Zuschalt-Differenzspannungen beim Laden und Entladen vorzusehen, um den Charakteristika des Lade- und Entladevorgangs besser gerecht zu werden.

Das Parallelschalten zweier elektrischer Speicher erfolgt dann optimal, wenn der Spannungsunterschied zum Zeitpunkt des Parallelschaltvorganges minimal ist. Von Vorteil wird daher eine Zuschalt-Differenzspannung $V_d$ von

$$V_d < I_{max} * R$$

gewählt, wobei es sich bei $I_{max}$ um den kleineren Wert des maximal zulässigen Stroms beim Zu- bzw. Abschalten des zweiten Speichers 2 und des Maximalstroms, der dem ersten und/oder zweiten Speicher 1, 2 zulässigerweise entnommenen werden darf, handelt und bei R um den nach der Parallelschaltung wirksamen Widerstand. $I_{max}$ stellt sich als der kleinere Wert des maximal zulässigen Schalterstroms und des maximal zulässigen Batteriestroms dar.

Mit besonderem Vorteil wird der Wert der Zuschalt-Differenzspannung zu

$$V_d < 0,1 * I_{max} * R$$

gewählt. Im Idealfall besteht beim Entladen zwischen der Klemmenspannung des ersten Speichers und der Leerlaufspannung des zweiten Speichers bzw. beim Laden zwischen der Klemmenspannung des zweiten Speichers und der Leerlaufspannung des ersten Speichers kein Spannungsunterschied.

Die Erfindung eignet sich insbesondere zur Parallelschaltung von Batterien oder Akkumulatoren, insbesondere Lithium-Ionen-Akkumulatoren, ganz besonders Lithium-Mangan-Akkumulatoren. Die erfindungsgemäße Schaltung wird mit Vorteil in elektrischen Antrieben, insbesondere elektrischen Bootsantrieben, eingesetzt.

Die Erfindung sowie weitere Einzelheiten der Erfindung werden im Folgenden anhand von in den Zeichnungen schematisch dargestellten Ausführungsbeispielen näher erläutert. Hierbei zeigen:

Figur 1      das Ersatzschaltbild einer Parallelschaitung mehrerer Lithium-Ionen-Batterien,

Figur 2      die U-I-Kennlinien bei der erfindungsgemäßen Parallelschaltung zweier Lithium-Ionen-Batterien,

Figur 3      die U-I-Kennlinien bei der erfindungsgemäßen Parallelschaitung dreier Lithium-Ionen-Batterien und

Fig. 4, 5      die Kennlinien bei Nutzung einer Hysterese.

Allen Figuren werden folgende vereinfachende Annahmen zugrundegelegt, um das Wesen der Erfindung besser darstellen zu können: Die Impedanzen bzw. Innenwiderstände sowie die Leerlaufspannungen der Speicher sind über die betrachteten Arbeitspunkt konstant. Die Erfindung ist aber nicht auf diesen Fall beschränkt.

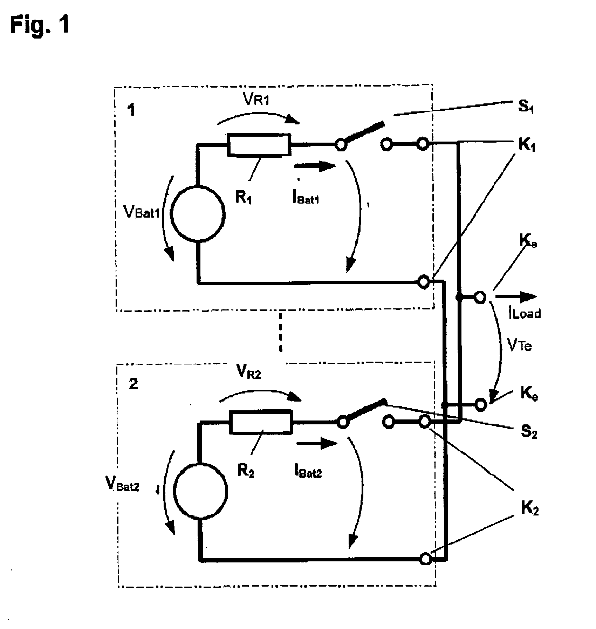

In Figur 1 ist das Ersatzschaltbild der Parallelschaltung einer ersten Lithium-Ionen. Batterie 1 mit weiteren Lithium-Ionen-Batterien dargestellt, wobei der Übersichtlichkeit halber in der Figur nur eine zweite Lithium-Ionen-Batterie 2 gezeigt ist. Die Erfindung sowie weitere vorteilhafte Ausgestaltungen der Erfindung werden im Folgenden beispielhaft an der Parallelschaltung von Lithium-Ionen-Batterien bzw. Lithium-Ionen-Akkumulatoren beschrieben. Die Erfindung ist aber nicht auf Lithium-Ionen-Batterien beschränkt und alle Ausführungen sind auch auf elektrische Speicher von anderem Typ übertragbar. Wie eingangs bereits angemerkt, umfasst der Begriff Batterie insbesondere auch wiederaufladbare Batterien und Akkumulatoren.

Die Lithium-Ionen-Batterien 1, 2 besitzen jeweils eine Leerlaufspannung $V_{Bat1}$. $V_{Bat2}$, und eine Impedanz $R_1, R_2$, über der bei Belastung der Lithium-Ionen-Batterie 1, 2 eine Spannung $V_{R1}$, $V_{R2}$ abfällt. Die Batterien 1, 2 sind mit je einem Schalter $S_1$, $S_2$ versehen, mittels derer eine der Anschlussklemmen $K_1$, $K_2$ mit der jeweiligen Batterie 1, 2 stromleitend verbunden oder von dieser getrennt werden kann. Die Anschlussklemmen $K_1$, $K_2$ sind mit äußeren Anschlüssen $K_e$ verbunden, an die ein elektrischer Verbraucher, beispielsweise ein Elektromotor, angeschlossen ist.

Für die folgenden Betrachtungen wird davon ausgegangen, dass die Leerlaufspannung $V_{Bat1}$ der ersten Batterie 1 größer ist als die Leerlaufspannung $V_{Bat2}$ der zweiten Batterie 2.

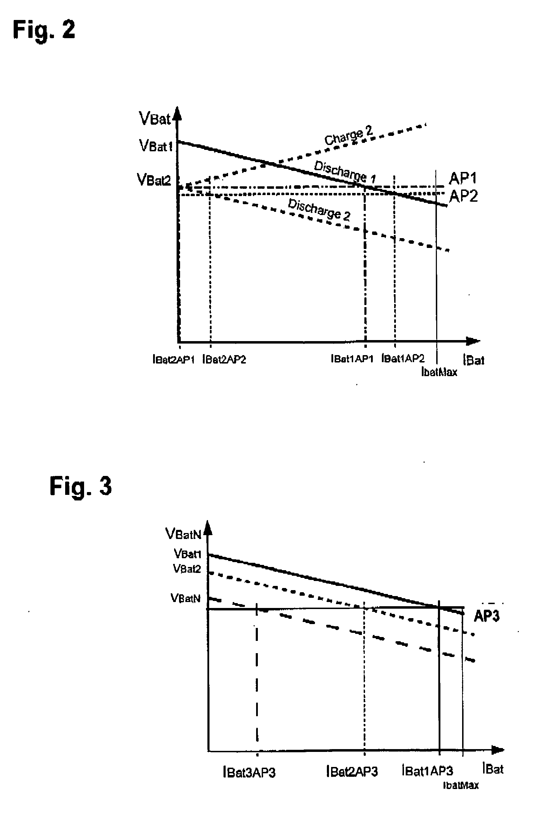

Zunächst wird nur Schalter $S_1$ geschlossen, so dass der Verbraucher ausschließlich aus der ersten Batterie 1 mit Energie versorgt wird. Die Klemmenspannung $V_{Te}$ an den äußeren Anschlüssen $K_e$ entspricht der Spannung an den Anschlussklemmen $K_1$ der ersten Batterie 1. Mit steigendem Strom fällt die Klemmenspannung $V_{Te}$ an den äußeren Anschlüssen $K_e$ ab. Die mit "Discharge 1" bezeichnete Kurve in Figur 2 stellt den Verlauf der Klemmenspannung $V_{Te}$ in Abhängigkeit vom Strom zum Verbraucher dar.

Die Gerade AP1 in Figur 2 stellt den Arbeitspunkt dar, zu dem die Klemmenspannung $V_{Te}$ soweit abgefallen ist, dass diese der Leerlaufspannung $V_{Bat2}$ der zweiten Batterie 2 entspricht. Im vorliegenden Beispiel ist die Zuschalt-Differenzspannung zu Null gewählt worden. Wenn sich die Klemmenspannung $V_{Te}$ der Leerlaufspannung $V_{Bat2}$ angeglichen hat, ist der Spannungsabfall über dem Schalter $S_2$ Null und der Schalter $S_2$ kann verluatleistungsfrei und verschleißfrei geschlossen werden. Das Schließen des Schalter $S_2$ dauert nur wenige Millisekunden. In dieser Zeit wird der Verbraucher so gesteuert, dass der fließende Strom konstant bleibt.

Im Arbeitspunkt AP1 liefert die zweite Batterie 2 noch keinen Strom in die Last, da der korrespondierende Strom für das aktuelle Spannungsverhältnis Null ist. Erst bei weiterer Erhöhung des Laststromes und damit weiter sinkender Spannung $V_{Te}$ (beispielsweise Arbeitspunkt AP2) nimmt der Strom aus beiden Batterien 1, 2 um den gleichen Betrag zu (siehe Verlauf der Kurven "Discharge 1" und "Discharge 2" in Figur 2). Da der bezüglich der Last wirksame Innenwiderstand durch die Parallelschaltung beider Lithium-Ionen-Batterien 1, 2 halbiert wurde, ist der Spannungsabfall je Zunahme an Leistungseinheit Jedoch nur noch halb so groß wie bei dem System, welches mit nur einer Batterie betrieben wurde.

Der zum Verbraucher fließende Laststrom ergibt sich als Summe der beiden Batterieströme. Da beide Lithium-Ionen-Batterien 1, 2 weiterhin unterschiedlich beansprucht werden, wird Batterie 1 stärker entladen als Batterie 2, so dass sich die Leerlaufspannungen beider Batterien 1, 2 angleichen. Der von den Batterien 1, 2 lieferbare Gesamtstrom ist umso höher, je weiter die Leerlaufspannungen der Batterien 1, 2 einander angeglichen sind, da der Beitrag der zweiten Batterie 2 proportional steigt. Diese Angleichung passiert bei Klemmspannungen $V_{Te}$, die kleiner oder gleich AP1 sind, ohne dass hierfür Ladungen von der Batterie 1 mit höherer Leerlaufspannung zur Batterie 2 mit niedrigerer Leerlaufspannung transportiert werden.

Das Verfahren wird analog bei mehr als zwei Batterien 1, 2, N angewendet. Hier wird ebenfalls zuerst ermittelt, welche Batterie die höchste Leerlaufspannung $V_{Bat}$ hat. In Figur 3 ist dies die Batterie 1. Die Batterie 1 wird daher zuerst eingeschaltet und belastet. Ist die Klemmspannung $V_{Te}$ auf die Leerlaufspannung $V_{Bat2}$ der Batterie 2 mit der zweithöchsten Spannung gefallen, wird diese eingeschaltet. Bei weiter steigender Belastung wird der Augenblick abgewartet, an dem die gemeinsame Klemmspannung $V_{Te}$ der Leerlaufspannung $V_{Bat3}$ der Batterie 3 mit der dritthöchsten Spannung entspricht, so dass dieser ebenfalls eingeschaltet werden kann. Dieses Verfahren kann für eine beliebige Anzahl N von Batterien wiederholt werden. Selbstverständlich ist diese Art der Parallelschaltung mehrerer Batterien auch bei Zuschalt-Differenzspannungen ungleich Null möglich, jedoch mit erhöhter Beanspruchung der Schalter.

In Figur 3 ist beispielhaft die Stromaufteilung bei der Parallelschaltung von N Batterien im Arbeitspunkt AP3 gezeigt. Der Laststrom $I_{Load}$ berechnet sich in diesem Fall zu:

$$I_{Load} = I_{Bat1AP3} + I_{Bat2AP3} + \ldots + I_{BatNAP3}.$$

Solange die externe Klemmspannung $V_{Te}$ unterhalb der kleinsten Leerlaufspannung der aktiven Batterien 1, 2, N liegt, liefern alle Batterien 1, 2, N ausschließlich In die Last Strom. Als aktive Batterien werden diejenigen Batterien bezeichnet, deren zugeordneter Schalter geschlossen ist und die mit den äußeren Anschlüssen $K_e$ elektrisch leitend verbunden sind. Wird die Leistung zurückgenommen, so dass die externe Klemmspannung über eine oder mehrere Leerlaufspannungen der bereits aktiven Batterien ansteigt, werden die Batterien, deren Leerlaufspannung unterhalb der Klemmenspannung liegt, geladen, die anderen Batterien tiefem den Strom hierfür.

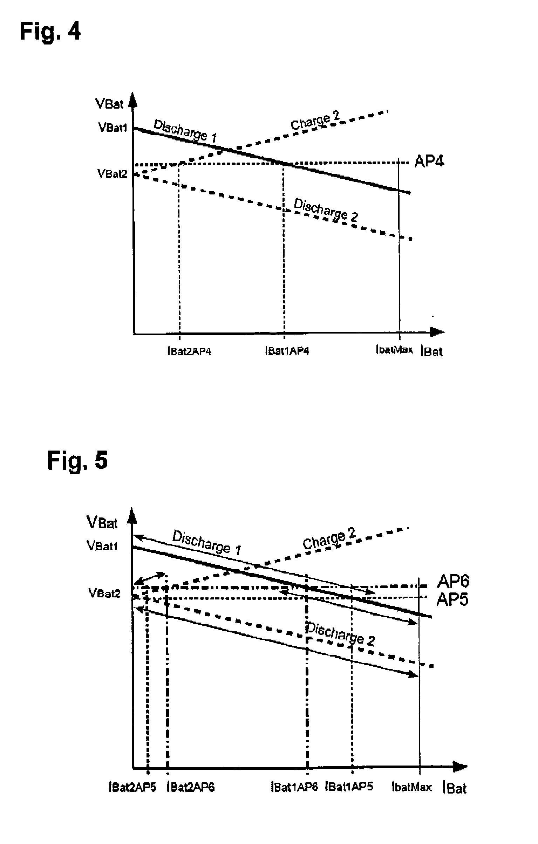

Figur 4 zeigt dies für den Fall zweier parallel geschalteter Batterien 1, 2. Beide Batterien 1, 2 wurden zuvor mit den äußeren Anschlüssen $K_e$ elektrisch leitend verbunden, d.h. die jeweiligen Schalter $S_1$, $S_2$ wurden geschlossen. Das heißt, die Klemmenspannung war zwischenzeitlich mindestens auf den Wert der Leerlaufspannung $V_{Bat2}$ des Akkumulators 2 abgefallen. Nach Verringerung der von dem Verbraucher abgezogenen Leistung ist die Klemmenspannung $V_{Te}$ wieder auf den Arbeitspunkt AP4 angestiegen. Die Leerlaufspannung $V_{Bat2}$ der Batterie 2 ist dann niedriger als die äußere Klemmenspannung $V_{Te}$, die Leerlaufspannung $V_{Bat1}$ der Batterie 1 ist höher als die äußere Klemmenspannung $V_{Te}$. Die Batterie 1 liefert dann sowohl Strom für den Verbraucher als auch zum Laden der Batterie 2 und die ursprüngliche Energiequelle Batterie 2 wird zu einer Energiesenke, d.h. einem Verbraucher. Dieser Ladungsausgleich zwischen den Batterien 1, 2 bei Rücknahme der Leistung bietet den Vorteil, dass der maximal verfügbare Strom schneller erreicht wird.

Der oben beschriebene Ladungsausgleich bei Reduzierung der Leistung hat aber auch den Nachteil, dass durch den von Batterie 1 zu Batterie 2 fließenden Strom zusätzliche Verluste entstehen. Der schnellere Ladungsausgleich wird daher beispielsweise bei Anschluss eines elektrischen Antriebs mit reduzierter Reichweite erkauft. Es kann deshalb auch vorteilhaft sein, nach einer Rücknahme der Verbraucherleistung und einem damit verbundenen Anstieg der äußeren Klemmenspannung die Batterie oder allgemein den Speicher, dessen Leerlaufspannung unterhalb der äußeren Klemmenspannung liegt, abzuschalten, das heißt den zugehörigen Schalter zu öffnen. In diesem Fall sind nach einer Reduzierung der Leistung nur noch diejenigen Speicher parallel geschaltet und tragen zur Stromversorgung des Verbrauchers bei, deren Leerlaufspannung größer als die momentane Klemmenspannung ist.

Um eine Instabilität des Systems im Bereich des Umschaltpunktes zu vermeiden, ist eine Hysterese vorgesehen. Zuschaltung und Abschaltung der Batterie 2 bzw. allgemein des Speichers erfolgen nicht bel derselben Spannung, sondern bei unterschiedlichen Spannungen. So wird beispielsweise die Batterie 2 dann zugeschaltet, d.h. parallel geschaltet, wenn die äußere Klemmenspannung $V_{Te}$ mit der Leerlaufspannung $V_{Bat2}$ der Lithium-Ionen-Batterie 2 übereinstimmt. Dies entspricht dem Arbeitspunkt 5 in Figur 5. Die Abschaltung der Batterie 2 erfolgt dagegen erst dann, wenn die Klemmenspannung $V_{Te}$ um einen bestimmten Wert über der Leerlaufspannung $V_{Bat2}$ der Llthium-Ionen-Batterie 2 liegt. Im Beispiel gemäß Figur 5 ist dies bei einer Klemmenspannung entsprechend dem Arbeitspunkt 6 der Fall. Die Klemmenspannung $V_{Te}$ muss also mindestens die Leerlaufspannung $V_{Bat2}$ plus eine bestimmte Abschalt-Differenzspannung erreichen.

Die Hysterese kann beispielsweise auch dadurch erreicht werden, dass die Zuschaltspannung unterhalb der Leerlaufspannung des zuzuschaltenden Speichers und die Abschalt-Differenzspannung bei der Leerlaufspannung des abzuschaltenden Speichers liegt. In diesem Fall ist die Zuschalt-Differenzspannung beim Zuschaften des zweiten Speichers 2 negativ und die Abschalt-Differenzspannung beim Abschalten des zweiten Speichers 2 gleich Null.

Sehr günstige Verhältnisse erhält man, wenn die Hysterese so klein wie möglich gewählt wird und die Hysteresspannungsdifferenz symmetrisch um die Leerlaufspannung des zu- bzw. abzuschaltenden Speichers 2 gelegt wird, so dass das Zuschalten unterhalb der Leerlaufspannung und das Abschalten oberhalb der Leerlaufspannung des zu aktivierenden / zu deaktivierenden Speichers 2 stattfindet. Die Zuschatt-Differenzspannung beim Zuschalten des zweiten Speichers 2 und die Abschalt-Differenzspannung beim Abschalten des zweiten Speichers 2 besitzen vorzugsweise denselben Betrag, sind aber negativ im Falle des Zuschaltens bzw. positiv im Falle des Abschaltens des zweiten Speichers 2. Im Beispiel nach Figur 5 entspricht die Hysterespannungsdifferenz der Differenz der Spannungen in den Arbeitspunkten AP5 und AP6. Es wird im Arbeitspunkt AP5 zugeschaltet und im Arbeitspunkt AP6 wird abgeschaltet.

Die Leerlaufspannung kann nur bei unbelasteter Batterie ermittelt werden. Wird der Batterie Ladung entnommen, oder wird der Batterie Ladung zugeführt, ändert sich die Leerlaufspannung. Damit ändert sich der optimale Arbeitspunkt für das Abschalten. Um sicherzustellen, dass der Schalterstrom beim Abschalten die zulässigen Grenzen nicht überschreitet, ist es sinnvoll, die sich ändernde Leerlaufspannung im belasteten Zustand der Batterie mit einem Batteriemodell zu berechnen. Die Leerlaufspannung der abzuschaltenden Batterie wird vorzugsweise unter Verwendung eines Batteriemodells berechnet.

Die Steuerung des Abschaltens der Schalter kann alternativ zur oben beschriebenen Methode über die Differenzspannung auch basierend auf der Messung des Batteriestromes vorgenommen werden. Das Ausschalten findet bevorzugt dann statt, wenn der Strom durch den zu betätigenden Schalter Null oder nahe Null ist. Mit Rücksicht auf die Stabilität der Systemzustände soll das Ein- und Ausschalten einer Stromhysterese folgen. Unter der Annahme das ein motorischer Strom, bei dem die Batterie Energie aufnimmt, d.h. die Batterie wird geladen, positiv gezählt wird bzw. ein positives Vorzeichen hat, findet das Schließen des Schalters des zweiten Speichers bei kleineren Stromwerten statt als das Öffnen des Schalters. Bevorzugt werden Schließen und Öfnnen des Schalters symmetrisch zum Stromwert Null stattfinden. Bei diesem Vorgehen wird im Falle der Lieferung von Energie an den Verbraucher die Batterie mit der niedrigeren Energie dann abgeschaltet, wenn ihr Strom um einen bestimmten Wert motorisch geworden ist, d.h., wenn die Batterie beginnt Energie aufzunehmen, was dann passiert, wenn die Leerlaufspannung der Batterie unterhalb der äußeren Klemmspannung liegt.

Beim Laden wird dieses Verfahren dahingehend geändert, dass die Batterie mit der höheren Ladung dann abgeschaltet wird, wenn deren Strom um einen bestimmten Wert beginnt generatorisch zu werden, d.h. die Batterie beginnt Energie zu liefern.

Die Schaltung des ersten elektrischen Speichers und des zweiten elektrischen Speichers weist hierzu von Vorteil pro Speicher ein Strommessgerät zur Erfassung des von oder zu dem Speicher fließenden Stroms auf. Als Kriterium für das Abschalten des zweiten Speichers dient der von dem Strommessgerät bestimmte Strom. Das Strommessgerät misst das Vorzeichen des Stroms, das heißt, es ermittelt, ob der Strom zu dem zweiten Speicher fließt oder von dem zweiten Speicher abgezogen wird. Je nachdem, ob der zweite Speicher motorisch oder generatorisch arbeitet, wird der zweite Speicher von den Anschlussklemmen abgekoppelt. Von Vorteil wird zusätzlich der Betrag des Stroms von dem Strommmessgerät gemessen und das Abschalten des zweiten Speichers auch in Abhängigkeit vom Strombetrag geregelt.

Bei motorischer Last, das heißt wenn ein Verbraucher oder eine Last mit Strom versorgt werden, kann der zweite Speicher dann von dem ersten Speicher und dem Verbraucher getrennt werden, wenn ein bestimmter Mindeststrom vom ersten Speicher zu dem zweiten Speicher fließt. Der zweite Speicher arbeitet dann nicht mehr motorisch, sondern generatorisch. Umgekehrt findet bei einer generatorischen Last das Abschalten des abzuschaltenden Speichers bei einem bestimmten motorischen Stromwert statt.

## Patentansprüche

1. Verfahren zum Parallelschalten eines ersten elektrischen Speichers 1 und eines zweiten elektrischen Speichers 2, wobei der erste elektrische Speicher und der zweite elektrische Speicher jeweils eine Leerlaufspannung $U_{Bat1}$, $U_{Bat2}$ und eine Impedanz $R_1$ bzw. $R_2$ besitzen und Anschlussklemmen zur Ladungsentnahme oder Ladungszufuhr aufweisen, wobei die Leerlaufspannung $U_{Bat1}$ des ersten Speichers 1 größer als die Leerlaufspannung $U_{Bat2}$ des zweiten Speichers 2 lst, **dadurch gekennzeichnet, dass**

   bei Ladungsentnahme zunächst nur dem ersten Speicher 1 Ladung entnommen wird und der zweite Speicher 2 parallel zu dem ersten Speicher 1 geschaltet wird, wenn die Differenz der an den Anschlussklemmen des ersten Speichers 1 abfallenden Spannung und der Leerlaufspannung $U_{Bat2}$ des zweiten Speichers 2 weniger als eine vorgegebene Zuschalt-Differenzspannung beträgt und / oder bei Ladungszufuhr zunächst nur dem zweiten Speicher 2 Ladung zugeführt wird und der erste Speicher 1 parallel zu dem zweiten Speicher 2 geschaltet wird, wenn die Differenz der an den Anschlussklemmen des zweiten Speichers 2 abfallenden Spannung und der Leerlaufspannung $U_{Bat1}$ des ersten Speichers 1 weniger als eine vorgegebene Zuschalt-Differenzspannung beträgt.

2. Verfahren nach Anspruch 1, **dadurch gekennzeichnet, dass** der erste oder der zweite Speicher 1 ,2 mehrere parallel geschaltete Speicher aufweisen.

3. Verfahren nach Anspruch 1 oder 2, **dadurch gekennzeichnet, dass** für die Zuschalt-Differenzspannung $V_d$ gilt:

$$V_d < I_{max} * R,$$

wobei $I_{max}$ den kleineren Wert des maximal zulässigen Stroms beim Zu- bzw. Abschalten des zweiten Speichers 2 und des Maximalstroms, der dem ersten und/oder zweiten Speicher 1, 2 zulässigerweise entnommenen werden darf, darstellt und R die nach der Parallelschaltung des ersten und des zweiten Speichers 1, 2 wirksame Impedanz der Speicher 1, 2 darstellt..

4. Verfahren nach einem der Ansprüche 1 bis 3, **dadurch gekennzeichnet, dass** bei Parallelschaltung von mehr als zwei Speichern 1, 2 die Zuschalt-Differenzspannung der Impedanz der Speicher 1, 2 angepasst wird.

5. Verfahren nach einem der Ansprüche 1 bis 4, **dadurch gekennzeichnet, dass** bei Ladungszufuhr und bei Ladungsentnahme jeweils eine betragsmäßig gleiche Zuschalt-Differenzspannung gewählt wird.

6. Verfahren nach einem der Ansprüche 1 bis 5, **dadurch gekennzeichnet, dass** bei Ladungsentnahme die dem ersten Speicher 1 pro Zeiteinheit entnommene Ladung konstant gehalten wird, während der zweite Speicher 2 parallel zu dem ersten Speicher 1 geschaltet wird oder dass bei Ladungszufuhr die dem zweiten Speicher 2 pro Zeiteinheit zugeführte Ladung konstant gehalten wird, während der erste Speicher 1 parallel zu dem zweiten Speicher 2 geschaltet wird.

7. Verfahren nach Anspruch 6, **dadurch gekennzeichnet, dass** Signale mit einer Lastschaltung zur Steuerung oder Regelung der Last ausgetauscht werden, der von dem ersten und/oder zweiten Speicher 1, 2 Ladung zugeführt wird oder dieser entnommen wird, und dass bei Ladungsentnahme die von dem ersten Speicher 1 pro Zeiteinheit entnommene Ladung bzw. bei Ladungszufuhr die dem zweiten Speicher 2 pro Zeiteinheit zugeführte Ladung während des Schaltvorganges in Abhängigkeit von den Signalen konstant gehalten wird.

8. Verfahren nach einem der Ansprüche 1 bis 7, **dadurch gekennzeichnet, dass** der zweite Speicher 2 von dem ersten Speicher 1 und von dem Verbraucher getrennt wird, wenn die an den Anschlussklemmen $K_e$ gemessene Spannung von der Leerlaufspannung $U_{Bat2}$ des zweiten Speichers 2 um weniger als eine vorgegebene Abschalt-Differenzspannung abweicht.

9. Verfahren nach Anspruch 8, **dadurch gekennzeichnet, dass** sich die Abschalt-Differenzspannung von der Zuschalt-Differenzspannung unterscheidet.

10. Verfahren nach Anspruch 9, **dadurch gekennzeichnet, dass** bei Ladungsentnahme die Abschaltspannung größer als die Zuschaltspannung ist und dass bei Ladungszufuhr die Abschaltspannung kleiner als die Zuschaltspannung ist.

11. Verfahren nach einem der Ansprüche 9 oder 10, **dadurch gekennzeichnet, dass** die Zuschalt-Differenzspannung und die Abschalt-Differenzspannung denselben Betrag, aber unterschiedliches Vorzeichen aufweisen.

12. Verfahren nach einem der Ansprüche 1 bis 11, **dadurch gekennzeichnet, dass** bei Ladungsentnahme aus dem ersten Speicher 1 der zweite Speicher 2 von dem ersten Speicher 1 und von dem Verbraucher getrennt wird, wenn der Strom zum / vom zweiten Speicher 2 einen bestimmten Betrag nicht übersteigt.

13. Verfahren nach den Ansprüchen 1 bis 12 **dadurch gekennzeichnet, dass** das Abschalten des zweiten Speichers 2 innerhalb der Abschaltdifferenzspannung nur dann stattfindet, wenn der Gesamtstrom den zulässigen Strom des ersten Speichers 1 nicht mehr übersteigt.

14. Verfahren nach einem der Ansprüche 1 bis 13, **dadurch gekennzeichnet, dass** der erste und/oder zweite Speicher 1, 2 als Batterie, insbesondere als Lithium-Ionen-Batterie, ausgeführt sind.

15. Schaltung eines ersten elektrischen Speichers 1 und eines zweiten elektrischen Speichers 2, wobei der erste elektrische Speicher 1 über zwei erste elektrische Leiter mit Anschlussklemmen $K_e$ zur Ladungsentnahme oder Ladungszufuhr verbunden ist, wobei ein erster Schalter $S_1$ in einem der ersten elektrischen Leiter vorgesehen ist, wobei der zweite elektrische Speicher 2 über zwei zweite elektrische Leiter mit den Anschlussklemmen $K_e$ verbunden ist, wobei ein zweiter Schalter $S_2$ in einem der zweiten elektrischen Leiter vorgesehen ist, **dadurch gekennzeichnet, dass** ein erstes Messgerät zur Erfassung der speicherseitig des ersten Schalters $S_1$ zwischen den beiden ersten elektrischen Leitern anliegenden Spannung und ein zweites Messgerät zur Erfassung der speicherseitig des zweiten Schalters $S_2$ zwischen den beiden zweiten elektrischen Leitern anliegenden Spannung vorgesehen sind, wobei das erste und das zweite Messgerät an eine Steuereinheit angeschlossen sind, welche eine Vergleichseinheit zum Vergleichen der erfassten Spannungen und eine Ansteuerung des ersten und/oder zweiten Schalters $S_1$, $S_2$ in Abhängigkeit von dem Vergleich aufweist.

16. Schaltung nach Anspruch 15, **dadurch gekennzeichnet, dass** ein Strommessgerät zur Erfassung des von oder zu dem ersten und/oder zweiten Speicher 1, 2 fließenden Stroms vorgesehen ist.

**Fig. 1**

## Fig. 2

## Fig. 3

**Fig. 4**

**Fig. 5**

Europäisches
Patentamt

European
Patent Office

Office européen
des brevets

# EUROPÄISCHER RECHERCHENBERICHT

**Nummer der Anmeldung**

EP 11 00 1501

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2009 012908 A1 (FUJI HEAVY IND LTD [JP]) 8. Oktober 2009 (2009-10-08) * Zusammenfassung * * Abbildung 1 * * Absatz [0040] - Absatz [0042] * ----- | 1,2,5, 14-16 | INV. H02J7/00 H01M10/44 H01M10/48 |
| X | EP 0 871 275 A2 (SONY CORP [JP]) 14. Oktober 1998 (1998-10-14) * Spalte 7, Zeile 26 - Spalte 11, Zeile 18 * * Zusammenfassung * * Abbildungen 1,2,4 * ----- | 1-4, 14-16 | |
| E | DE 10 2010 046660 A1 (SANYO ELECTRIC CO [JP]) 12. Mai 2011 (2011-05-12) * Zusammenfassung * * Abbildungen 1,3,5,9 * * Absatz [0015] - Absatz [0016] * * Absatz [0032] - Absatz [0038] * * Absatz [0043] - Absatz [0044] * * Absatz [0047] - Absatz [0048] * ----- | 1,15,16 | |
| A | WO 2010/069916 A2 (APPLIED SWEEPERS LTD [GB]; RIACH ALAN [GB]) 24. Juni 2010 (2010-06-24) * das ganze Dokument * ----- | 1,15 | RECHERCHIERTE SACHGEBIETE (IPC) H02J H01M |

Der vorliegende Recherchenbericht wurde für alle Patentansprüche erstellt

| Recherchenort | Abschlußdatum der Recherche | Prüfer |
|---|---|---|
| München | 29. Juli 2011 | Hartmann, Martin |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...................................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 11 00 1501

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-07-2011

| Im Recherchenbericht angeführtes Patentdokument | Datum der Veröffentlichung | Mitglied(er) der Patentfamilie | | Datum der Veröffentlichung |
|---|---|---|---|---|
| DE 102009012908 A1 | 08-10-2009 | JP | 2009214839 A | 24-09-2009 |
| | | US | 2009230766 A1 | 17-09-2009 |
| EP 0871275 A2 | 14-10-1998 | US | 5982145 A | 09-11-1999 |
| DE 102010046660 A1 | 12-05-2011 | CN | 102035226 A | 27-04-2011 |
| | | JP | 2011072153 A | 07-04-2011 |
| | | US | 2011074354 A1 | 31-03-2011 |
| WO 2010069916 A2 | 24-06-2010 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1811592 B1